Europäisches Patentamt

European Patent Office

Office européen des brevets

(11) Veröffentlichungsnummer: **0 290 858 B1**

# (12) EUROPÄISCHE PATENTSCHRIFT

(45) Veröffentlichungstag der Patentschrift: **11.12.91**

(51) Int. Cl.⁵: **B29C 45/64**

(21) Anmeldenummer: **88106668.2**

(22) Anmeldetag: **26.04.88**

(54) **Verfahren und Vorrichtung zur Schliesskrafterzeugung der Schliesseinheit einer Spritzgiessmaschine.**

(30) Priorität: **07.05.87 DD 302525**
**07.05.87 DD 302524**
**07.05.87 DD 302523**

(43) Veröffentlichungstag der Anmeldung:
**17.11.88 Patentblatt 88/46**

(45) Bekanntmachung des Hinweises auf die
Patenterteilung:
**11.12.91 Patentblatt 91/50**

(84) Benannte Vertragsstaaten:
**AT DE FR GB IT**

(56) Entgegenhaltungen:
**AT-B- 385 464**
**AT-B- 385 465**

(73) Patentinhaber: **Hemscheidt Maschinentechnik Schwerin GmbH & Co.**
**Werkstrasse 2**
**O-2781 Schwerin(DE)**

(72) Erfinder: **Zelmer, Uwe, Dipl.-Ing.**
**Hermann-Matern-Strasse 24**
**O-2750 Schwerin(DE)**
Erfinder: **Brandt, Matthias**
**Gartenweg 13**
**O-2711 Sülstorf(DE)**
Erfinder: **Ackermann, Wolfgang**
**Pecser Strasse 27**
**O-2790 Schwerin(DE)**

(74) Vertreter: **Kohlmann, Karl Friedrich, Dipl.-Ing.**
**et al**
**Hoffmann, Eitle & Partner Arabellastrasse 4**
**(Sternhaus)**
**W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Das Anwendungsgebiet der Erfindung betrifft ein Verfahren und eine Vorrichtung zur Schließkrafterzeugung an Schließeinheiten von Spritzgießmaschinen zur Kunststoffverarbeitung, insbesondere zur Verarbeitung von Thermoplasten, mit Schließkräften größer 50 kN und für Werkzeugeinbauhöhen größer 100 mm, wobei die Schließeinheit im wesentlichen aus einer festen und einer beweglichen Werkzeugaufspannplatte besteht, das Werkzeug über einen die bewegliche Werkzeugaufspannplatte verschiebenden Eilgangantrieb geschlossen wird, bei geschlossenem Werkzeug die Werkzeugaufspannplatten über Säulen miteinander verbunden sind, und auf die sich in der festen Werkzeugaufspannplatte befindlichen Säulenenden Kraftelemente einwirken, die die Schließkraft aufbringen.

Für Schließeinheiten von Spritzgießmaschinen zur Kunststoffverarbeitung, die Schließkräfte über 50 kN realisieren und Werkzeuge über 100 mm Werkzeugeinbauhöhe verwenden, sind grundsätzlich hydraulische und hydro-mechanische Systeme zur Schließkraftaufbringung bekannt. Eine Variante dieser bekannten Systeme wird im DD-WP 79.378 beschrieben. In dieser Lösung ist eine feststehende Werkzeugaufspannplatte und eine bewegliche Werkzeugaufspannplatte sowie eine Stützplatte mit vier Säulen verbunden. Die durch die feststehenden Werkzeugaufspannplatten ragenden Säulenenden tragen düsenseitig Kolben. Um jeden Kolben sind hydraulische Arbeitszylinder angeordnet. Eilgangzylinder bewegen die bewegliche Werkzeugaufspannplatte zur feststehenden Werkzeugaufspannplatte bis das Werkzeug geschlossen ist. Dann werden die Werkzeugaufspannplatten an den Säulen verriegelt. Durch Beaufschlagung der Kolben in den Arbeitszylindern wird über eine Stellmutter die Schließ- und Zuhaltekraft auf das Werkzeug übertragen. Diese konkrete Lösung sowie prinzipiell alle hydraulischen und hydro-mechanischen Schließeinheiten haben die gemeinsamen Nachteile eines hohen Kostenaufwandes, des Einsatzes von Druckmitteln und der damit verbundenen Umweltschädlichkeit, einen komplizierten maschinentechnischen Ablauf mit entsprechend aufwendigen Steuerungen sowie ein ungünstiges Verschleißverhalten der Schließelemente. Die Trockenlaufzeit wird durch die Verriegelung und Entriegelung erhöht. Weitere Nachteile sind der hohe Energieverbrauch und ein hohes Geräuschniveau. Im DD-WP 146.406 wird eine hydro-mechanische Schließeinheit für Spritzgießmaschinen beschrieben, die aus einer festen und einer beweglichen Werkzeugaufspannplatte besteht. In der beweglichen Werkzeugaufspannplatte sind freitragend vier Säulen mit Klauen gelagert. Die Enden der Säulen sind als Kolben für die Schließzylinder ausgebildet. Beim Werkzeugschließen tauchen die Kolben in die Schließzylinder ein. Dabei erfolgt die Verriegelung der beiden Werkzeugaufspannplatten durch Verdrehung der Klauen in entsprechenden Buchsen der Schließzylinder. Durch Druckbeaufschlagung der Schließzylinder wird die Schließkraft nach vollendeter Verriegelung aufgebracht. Zum Öffnen der Werkzeughälften nach dem Spritzzyklus müssen die Verriegelungselemente wieder entriegelt werden, um dann durch den Eilgangzylinder aufgefahren werden zu können. Die Nachteile sind entsprechend den o.g. Nachteilen zum DD-WP 79.378.

Weiterhin ist aus der DE-OS 2.022.343 eine Schließeinheit für eine Spritzgießmaschine zur Herstellung von Dia-Rähmchen bekannt, bei der die Schließkraft elektromagnetisch aufgebracht wird. Diese Schließeinheit muß allerdings nur sehr geringe Schließkräfte aufbringen. Die Schließeinheit weist eine weitere Besonderheit auf. Es gibt keine herkömmliche Trennung von Werkzeugaufspannplatte und Werkzeug, sondern beides ist ein Teil, der hier als Formkasten bezeichnet wird. D.h. es gibt einen feststehenden Formkasten und einen beweglichen Formkasten. Diese Zusammenfassung von Werkzeugaufspannplatte und Werkzeug zu einem Teil läßt sich allerdings nur bei sehr kleinen und flachen Formteilen, in diesem Fall den Dia-Rähmchen, realisieren. Bei größeren Formteilen würden die zu bewegenden Massen zu groß und die Materialkosten zu hoch sein. Das Anwendungsgebiet dieser Maschine ist also sehr begrenzt. Aus der Zusammenfassung von Werkzeugaufspannplatte und Werkzeug zu einem Formkasten mit eingearbeiteter Negativform des zu spritzenden Formteils ergibt sich eine weitere Besonderheit dieser Schließeinheit, es sind keine Säulen vorhanden, die die Schließkraft übertragen müssen, da während des Spritzvorganges die beiden Formkästen formschlüssig verbunden sind. Die Schließkraft wird dabei durch Magnetspulen aufgebracht, die in den Formkästen angeordnet sind.

Der Nachteil dieser Schließeinheit besteht in ihrem geringen Anwendungsgebiet, nämlich für sehr kleine und flache Formteile, bei denen während des Spritzvorganges nur geringe Schließkräfte < 50 kN nötig sind und kein herkömmliches Werkzeug eingesetzt werden muß.

Die Erfindung hat die Aufgabe, eine Verfahrensweise und Vorrichtungen zur Schließkrafterzeugung an Schließeinheiten von Spritzgießmaschinen zur Kunststoffverarbeitung, insbesondere von Thermoplasten, zu entwickeln, die notwendige Schließkräfte größer 50 kN bei Werkzeugeinbauhöhen größer 100 mm ohne die Verwendung von Hydraulik aufbringen, relativ verschleißfrei arbeiten und die sich durch eine optimale Energieausnutzung auszeichnen, ein niedriges Geräuschniveau der Maschine gewährleisten, umweltfreundlich arbeiten und niedrige Trockenlaufzeiten der Schließeinheiten ermöglichen.

Erfindungsgemäß wird die Aufgabe bei einem Verfahren der eingangs genannten Art dadurch gelöst, daß die Säulenenden beim Werkzeugschließen in Elektromagnete eintauchen und bei Zuführung von Gleichstrom den Anker für die elektromagnetische Schließkrafterzeugung bilden. Zur Durchführung des Verfahrens dient eine Vorrichtung der eingangs genannten Art, die dadurch gekennzeichnet ist, daß auf der werkzeugabgewandten Seite der festen Werkzeugaufspannplatte in axialer Verlängerung der Öffnungen für das Eintauchen der Säulenenden Elektromagnete angeordnet sind. Ein Elektromagnet besteht dabei aus einem Mantel, einem an der festen Werkzeugaufspannplatte angeordneten Rückschlußdeckel und einem als abgesetzten zylindrischen Körper ausgebildeten Magnetkern, dessen kleinerer Durchmesser in Werkzeugrichtung weist und mindestens der Größe des Säulendurchmessers entspricht. Bei geschlossenem Werkzeug befindet sich zwischen der Stirnfläche des kleineren zylindrischen Teils des Magnetkerns und der dazu parallelen Stirnfläche des Säulenendes ein Luftspalt mit definierter Größe s. Zwischen Rückschlußdeckel und Magnetkern ist eine Spule angeordnet, die vom Mantel umschlossen wird. Die Spule umschließt bei geschlossenem Werkzeug den kleinen zylindrischen Teil des Magnetkerns, den Luftspalt s und einen Teil des Säulenendes. In einer weiteren Vorrichtung sind auf der werkzeugabgewandten Seite der festen Werkzeugaufspannplatte um die durch die feste Werkzeugaufspannplatte hindurchragenden Säulenenden zylindrische Elektromagnete angeordnet. Ein Elektromagnet besteht aus einem zylindrischen Mantel, einem an der festen Werkzeugaufspannplatte angeordneten Rückschlußdeckel und einem als abgesetzten zylindrischen Körper ausgebildeten Magnetkern, dessen kleinerer Durchmesser in Werkzeugrichtung weist und dem Säulenendendurchmesser entspricht und dessen größerer Durchmesser dem Außendurchmesser des Mantels entspricht. Zwischen Stirnfläche des kleinen zylindrischen Teils des Magnetkerns und der parallelen Stirnfläche des Säulenendes befindet sich in einer definierten Größe ein Luftspalt s. Um den kleinen zylindrischen Teil des Magnetkerns, dem Luftspalt s und einem Teil des Säulenendes ist eine Spule angeordnet. Der Säulenendendurchmesser ist größer als der Säulendurchmesser, und die Säulenenden sind in Ausnehmungen der festen Werkzeugaufspannplatte gelagert. Der Spulenkörper besteht aus elektrisch leitendem Bandmaterial, vorzugsweise aus Aluminiumfolie.

Die Erfindung soll nachstehend in einem Ausführungsbeispiel näher erläutert werden. Die zugehörigen Zeichnungen zeigen.

Fig. 1:    Gesamtansicht einer erfindungsgemäßen Schließeinheit in geöffnetem Zustand

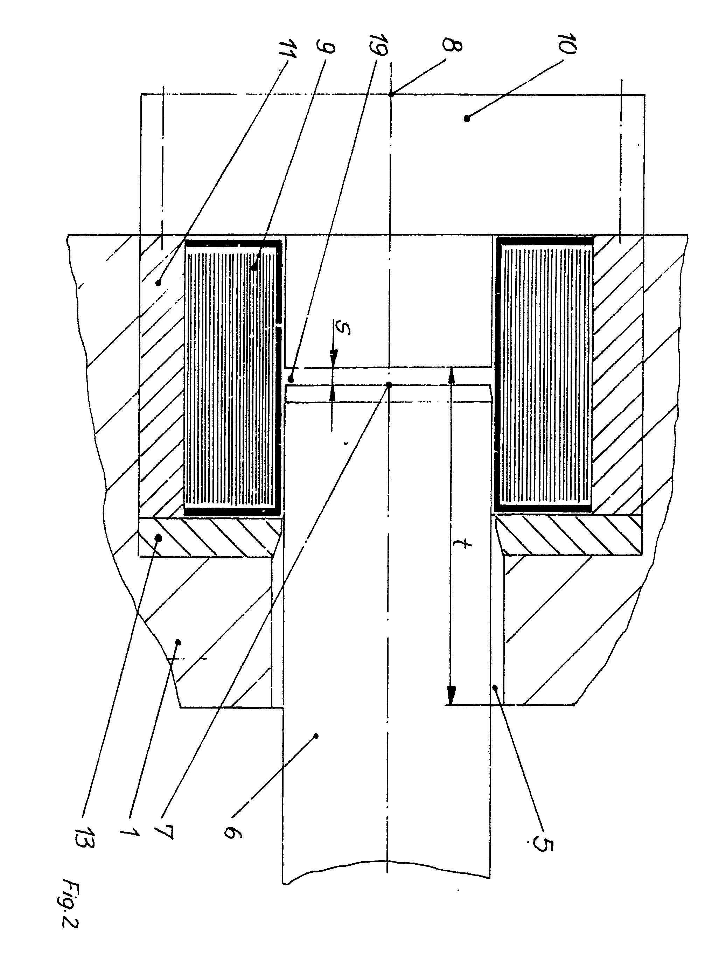

Fig. 2:    Darstellung eines Elektromagneten bei eingetauchter Säule

Fig. 3:    Gesamtansicht der Schließeinheit in geschlossenem Zustand

Fig. 4:    Gesamtansicht einer weiteren erfindungsgemäßen Schließeinheit

Fig. 5:    Darstellung eines Elektromagneten am Säulenende

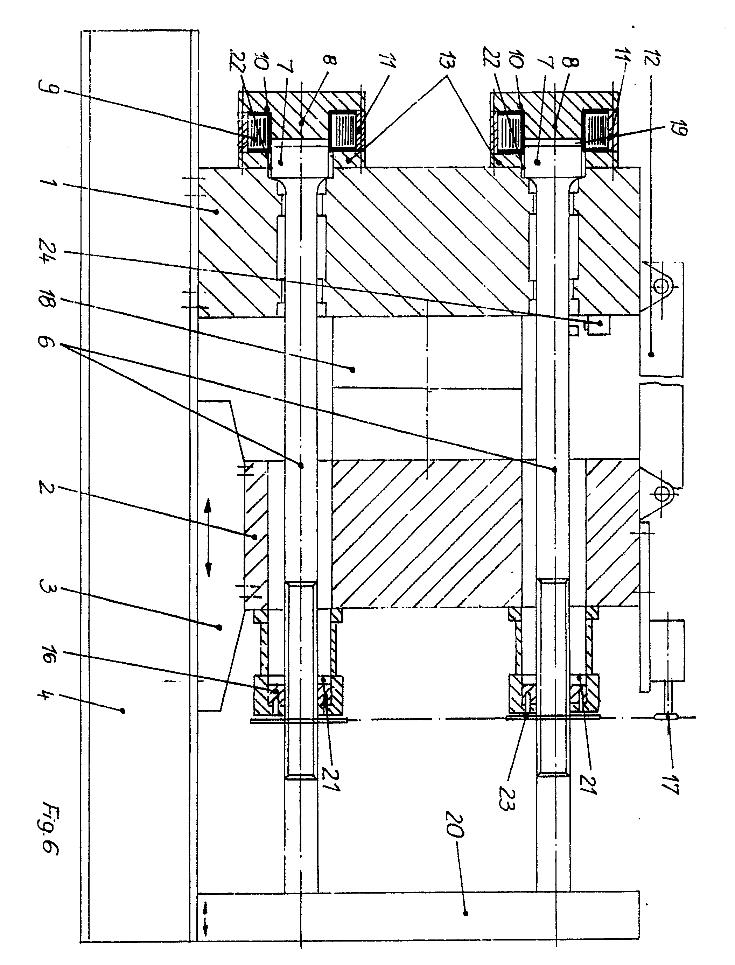

Fig. 6:    Gesamtansicht der Schließeinheit im geschlossenen Zustand

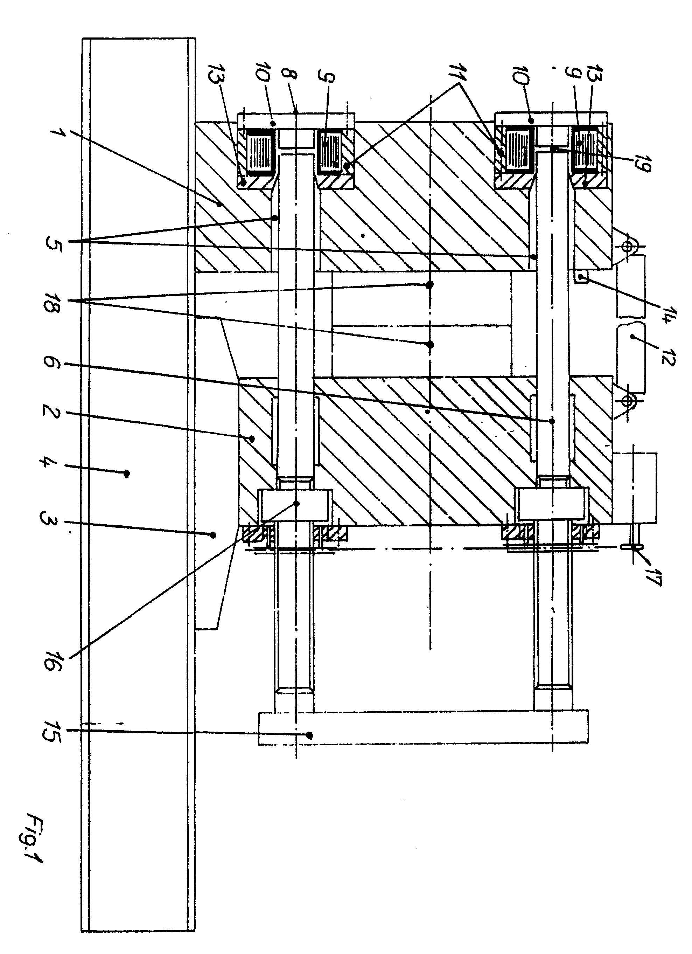

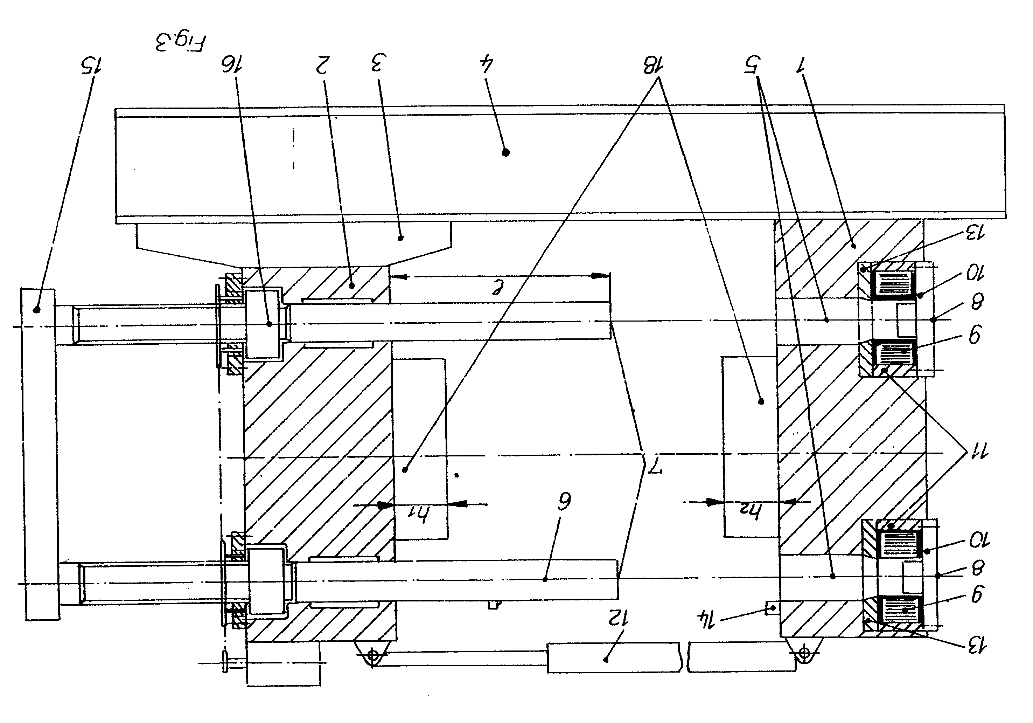

In Fig. 1 und 3 ist eine erfindungsgemaesse Schliesseinheit fuer eine Spritzgiessmaschine zur Verarbeitung von Kunststoffen, insbesondere von Thermoplasten dargestellt. Die Schliesskraefte die aufgebracht werden koennen sind groesser 50kN und die Werkzeugeinbauhoehe groesser 100mm. Die Schliesseinheit besteht im wesentlichen aus einer festen Werkzeugaufspannplatte 1, einer beweglichen Werkzeugaufspannplatte 2, die auf Gleitschuhen 3 auf dem Schliessseitenuntersatz 4 verfahrbar ist und einem Stuetzrahmen 15. In der beweglichen Werkzeugaufspannplatte 2 sind vier Saeulen 6 freitragend gelagert. Die freitragenden Enden der Saeulen 6 sind zur festen Werkzeugaufspannplatte 1 gerichtet. In der festen Werkzeugaufspannplatte 1 sind Oeffnungen 5 zum Eintauchen der Saeulenenden 7 angeordnet. Um unterschiedliche Werkzeugeinbauhoehen realisieren zu koennen, ist an der beweglichen Werkzeugaufspannplatte 2 ein Spulantrieb 17 angeordnet. Mit diesem Spulantrieb 17 lassen sich die Saeulenmuttern 16 auf den Saeulen 6 verstellen.

An der festen Werkzeugaufspannplatte 1 sind duesenseitig vier Elektromagnete 8 in Verlaengerung der gedachten Symmetrielinie der Saeulen 6 und der Oeffnungen 5 angeordnet.

Ein Elektromagnet 8 besteht aus dem als abgesetzten zylindrischen Koerper ausgebildeten Magnetkern 10. Dabei entspricht der kleinere Durchmesser des Magnetkerns 10 dem Durchmesser des Saeulenendes 7. Die Stirnflaeche des kleineren Durchmessers des Magnetkerns 10 steht der Stirnflaeche des Saeulenendes 7 parallel und in einem definierten Abstand s gegenueber. Dieser Luftspalt 19 soll je nach Maschinengroesse und Elastizitaet des Systems Schliesseinheit zwischen 3 und 10mm betragen. Die Groesse dieses Luftspaltes wird bei der Grundeinstellung der Maschine voreingestellt. Am groesseren zylindrischen Teil des Magnetkerns 10 ist der Mantel 11 angeordnet. Der Mantel 11 verbindet Magnetkern 10 und Rueckschlussdeckel 13. Ueber den zylindrischen Teil mit den groesseren Durchmesser des Magnetkerns 10, dem Mantel 11 und dem Rueckschlussdeckel 13 wird der Elektromagnet 8 an der festen Werkzeugaufspannplatte 1 befestigt. Auf den zylindrischen Teil des Magnetkernes 10 mit dem kleineren Durchmesser ist die Spule 9 angeordnet, die somit von Magnetkern 10, Mantel 11, Rueckschlussdeckel 13, Saeulenende 7 und dem Luftspalt 19 umschlossen ist. Um ein guenstiges Verhaeltnis von Groesse, Masse und Leistung der Elektromagneten 8 zu erreichen sind die Spulen 7 aus elektrisch leitenden Bandmaterial, vorzugsweise aus Aluminiumfolie ausgebildet.

Die Funktion der Schliesseinheit wird wie folgt beschrieben. Die Maschine wird zuerst grundeingestellt, um den definierten Luftspalt 19 mit der Groesse s zwischen Stirnflaechen der Magnetkerne 10 und Stirnflaechen der Saeulenenden 7 herzustellen. Dazu werden durch den Spulantrieb 17 die Saeulenmuttern 16 rotatorisch bewegt, um die Saeulen 6 in der beweglichen Werkzeugaufspannplatte 2 zu verschieben. Dazu ist die Eintauchtiefe t als Masz bekannt und die Werkzeugeinbauhoehe $h_1$ und $h_2$ wird durch das Werkzeug 18 bestimmt. Die erforderliche und einzustellende Laenge 1 der Saeulen 6 ergibt sich aus $l = h_1 + h_2 + t - s$.

Nach Erreichen der gewuenschten Laenge 1 wird der Spulantrieb 17 abgeschaltet. Damit ist die Grundeinstellung der Maschine abgeschlossen.

Zum Spritzzyklus wird die bewegliche Werkzeugaufspannplatte 2 durch den Eilgangantrieb 12 in Richtung feste Werkzeugaufspannplatte 1 verschoben, bis das Werkzeug 18 geschlossen ist. Hier wird ein bedeutender Vorteil dieser Schliesseinheit erkennbar, denn die beiden Werkzeugaufspannplatten 1 und 2 brauchen zum Spritzzyklus nicht miteinander verriegelt werden. Ebenso entfaellt ein Entriegeln beim Oeffnen der beiden Werkzeughaelften 1 und 2. Das bedeutet Verkuerzung der Trockenlaufzeit und einfachere Herstellung der Schliesseinheit, da die komplizierten Verriegelungselemente entfallen. Die Schliesskraft wird nun durch Zufuhr von Gleichstrom ueber einen oder mehrere Thyristorstromsteller aufgebracht, um eine kontinuierliche Erhoehung der Stromstaerke zu erreichen. Die Stromstaerke wird bis zum Erreichen der Schliesskraft erhoeht. Die Verformung durch die Gesamtelastizitaet des mechanischen Systems der Schliesseinheit muss bei erreichter Schliesskraft kleiner als die Groesse s des voreingestellten Luftspaltes 19 sein.

Das Formteil kann nun durch die Spritzeinheit der Spritzgiessmaschine gespritzt werden. Nach abgelaufener Zykluszeit wird die Schliesskraft aufgehoben. Dazu wird zuerst der Gleichstrom der Spule 9 ueber eine entsprechende Schaltung abgeschaltet. Diese Schaltungen sind aus dem Stand der Technik hinreichend bekannt. Zur Unterstuetzung des Oeffnungsvorganges muss der remanente Magnetismus des magnetischen Kreises beseitigt werden. Dazu werden die Wicklungen der Spulen 9 mit einem entgegengesetzten Stromfluss erregt. Gleichzeitig wird der Eilgangantrieb 12 zugeschaltet. Erreicht die Magnetisierungskurve den Kraftflussnullpunkt werden die Saeulen 6 vom Magnetkern 10 durch den Eilgangantrieb 12 getrennt und damit das Werkzeug 18 geoeffnet. Die bewegliche Werkzeugaufspannplatte 2 faehrt in Grundstellung, wobei ueber das Schaltelement 14 der entegegengesetzte Stromfluss abgeschaltet wird.

Der entgegengesetzte Strom darf nur so gross sein, dass die Magnetisierungskurve den Kraftflussnullpunkt erreicht, da es bei einer weiteren Erhoehung dieses Stromes wieder zu einer Anziehung der Werkzeughaelften kaeme.

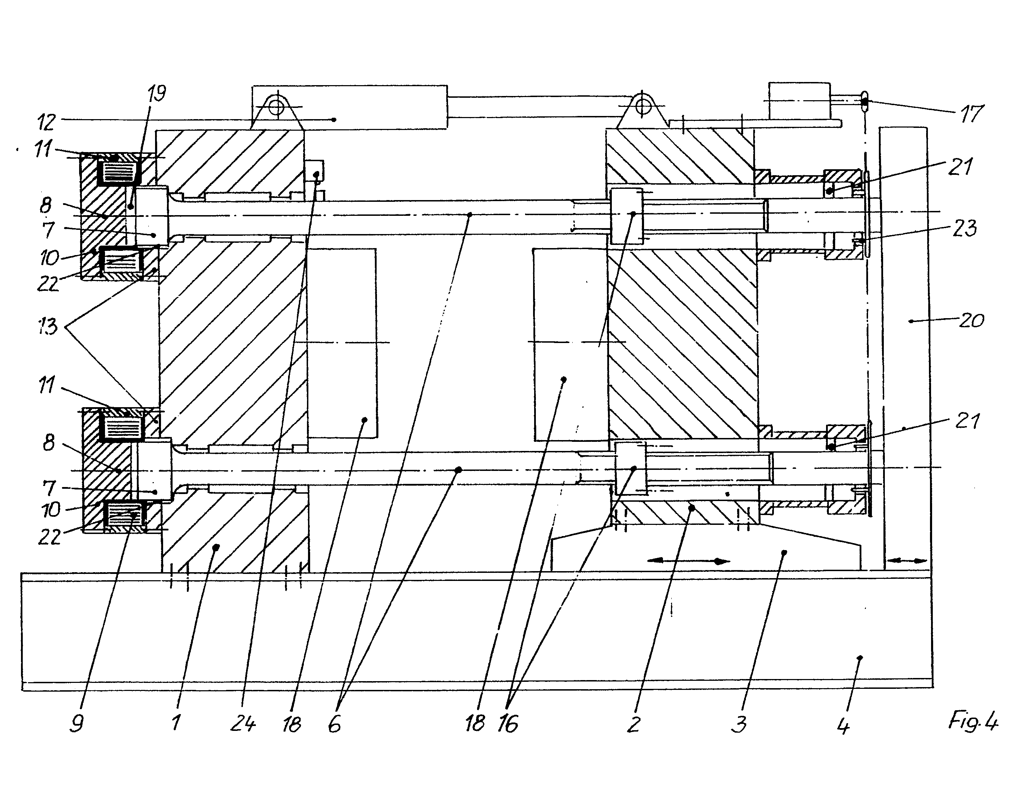

In Fig. 4 ist eine weitere erfindungsgemaesse Schliesseinheit fuer eine Spritzgiessmaschine zur Verarbeitung von Kunststoffen, insbesondere von Thermoplasten dargestellt. Die Schliesseinheit besteht im wesentlichen aus einer festen Werkzeugaufspannplatte 1, einer beweglichen Werkzeugaufspannplatte 2, die auf Gleitschuhen 3 auf dem Schliessseitenuntersatz 4 gleitend gelagert ist und einer Stuetzplatte 20. Stuetzplatte 20 und feste Werkzeugaufspannplatte 1 sind durch vier Saeulen 6 miteinander verbunden. Im Bereich der beweglichen Werkzeugaufspannplatte 2 befinden sich auf den Saeulen 6 Saeulenmuttern 16. Die Bewegung der beweglichen Werkzeugaufspannplatte 2 wird durch die Saeulen 6 und den Saeulenmuttern 16 bei geoeffneten Verriegelungselementen 21 nicht behindert. Die Verriegelungselemente 21 sind um die Saeulen 6 an der werkzeugabgewandten Seite der beweglichen Werkzeugaufspannplatte 2 angeordnet. Ebenfalls an der beweglichen Werkzeugaufspannplatte 2 ist ein Spulantrieb 17 angeordnet. Mit diesem Spulantrieb 17 lassen sich die Saeulenmuttern 16 auf den Saeulen 6 verstellen, um unterschiedliche Werkzeugeinbauhoehen realisieren zu koennen. An der festen Werkzeugaufspannplatte 1 sind duesenseitig vier Elektromagnete 8 um die durch die feste Werkzeugaufspannplatte 1 ragenden Saeulenenden 7 angeordnet. Um die benoetigten hohen Schliesskraefte aufbringen zu koennen, sind in dieser Schliesseinheit die Durchmesser der zylindrischen Saeulenenden 7 groesser als die Durchmesser der Saeulen 6. In der festen Werkzeugaufspannplatte 1 sind deshalb Ausnehmungen 22 fuer die Aufnahme dieser Saeulenenden 7 vorgesehen. Ein Elektromagnet 8 besteht aus dem als abgesetzten zylindrischen Koerper ausgebildeten Magnetkern 10. Dabei entspricht der kleinere Durchmesser des Magnetkerns 10 dem Durchmesser des Saeulenendes 7. Die Stirnflaeche des kleineren Durchmessers des Magnetkerns 10 steht der Stirnflaeche des Saeulenendes 7 parallel und in einem definierten Abstand s gegenueber. Dieser Luftspalt soll je nach Maschinengroesse und Elastizitaet der Schliesseinheit zwischen 3 und 10mm betragen.Die Groesse dieses Luftspaltes19 wird bei der Grundeinstellung der Maschine voreingestellt. Am groesseren zylindrischen Teil des Magnetkerns 10 ist der Mantel 11 angeordnet. Der Mantel 11 verbindet Magnetkern 10 und Rueckschlussdeckel 13. Ueber den zylindrischen Teil mit dem groesseren Durchmesser des Magnetkerns 10, dem Mantel 11 und dem Rueckschlussdeckel 13 wird der Elektromagnet 8 an der festen Werkzeugaufspannplatte 1 befestigt. Auf dem zylindrischen Teil des Magnetkernes 10 mit dem kleineren Durchmesser ist die Spule 9 angeordnet, die somit von Magnetkern 10, Mantel 11, Rueckschlussdeckel 13, Saeulenende 7 und den Luftspalt 19 umschlossen ist. Um ein guenstiges Verhaeltnis von Groesse, Gewicht und Leistung der Elektomagneten 8 zu erreichen sind die Spulen 9 aus elektrisch leitendem Bandmaterial, vorzugsweise aus Aluminiumfolie, ausgebildet.

Die Funktion der Schliesseinheit wird wie folgt beschrieben. Die Maschine wird zuerst grundeingestellt, um den definierten Luftspalt 19 zwischen Stirnflaechen der Magnetkerne 10 und Stirnflaechen der Saeulenenden 7 herzustellen. Dazu wird durch den Eilgangantrieb 12 die bewegliche Werkzeugaufspannplatte 2 zur festen Werkzeugaufspannplatte 1 soweit verschoben, bis sich die Verriegelungselemente 21 zwischen der beweglichen Werkzeugaufspannplatte 2 und den Saeulenmuttern 16 befinden. Dann erfolgt die Verriegelung indem die Verriegelungselemente 21 geschlossen werden. Durch den Spulantrieb 17 werden die Saeulenmuttern 16 ueber in sie eingreifende Stifte 23 rotatorisch in Richtung feste Werkzeugaufspannplatte 1 verschoben und druecken dabei die bewegliche Werkzeugaufspannplatte 2 in die gleiche Richtung bis das Werkzeug 18 geschlossen ist. Bei nun weiter erfolgender Beaufschlagung der Saeulenmuttern 16 durch den Spulantrieb 17 werden die Saeulen 6 zurueckgeschoben bis die Saeulenenden 7 an die Ausnehmungen 22 anschlagen. Das wird durch einen Endschalter 24 signalisiert, der den Spulantrieb 17 abschaltet. Die bewegliche Werkzeugaufspannplatte 2 kann nun wieder durch den Eilgangantrieb 12 in die Grundstellung, also geoeffnet, verschoben werden. Vorher werden die Verriegelungselemente 21 geoeffnet. Damit ist auch schon gesagt, dass fuer jede Maschinengroesse die Ausnehmungen 22 so gross sind, dass letztendlich der gewollte Luftspalt 19 realisiert werden kann. Die Reibung zwischen Saeulenmuttern 16 und Verriegelungselementen 21 kann bei der Grundeinstellung vernachlaessigt werden, da die Saeulen 6 in der festen Werkzeugaufspannplatte 1 gleitend gelagert sind. Ebenso ist die Stuetzplatte 20 gleitend am Schliessseitenuntersatz 4 gelagert.

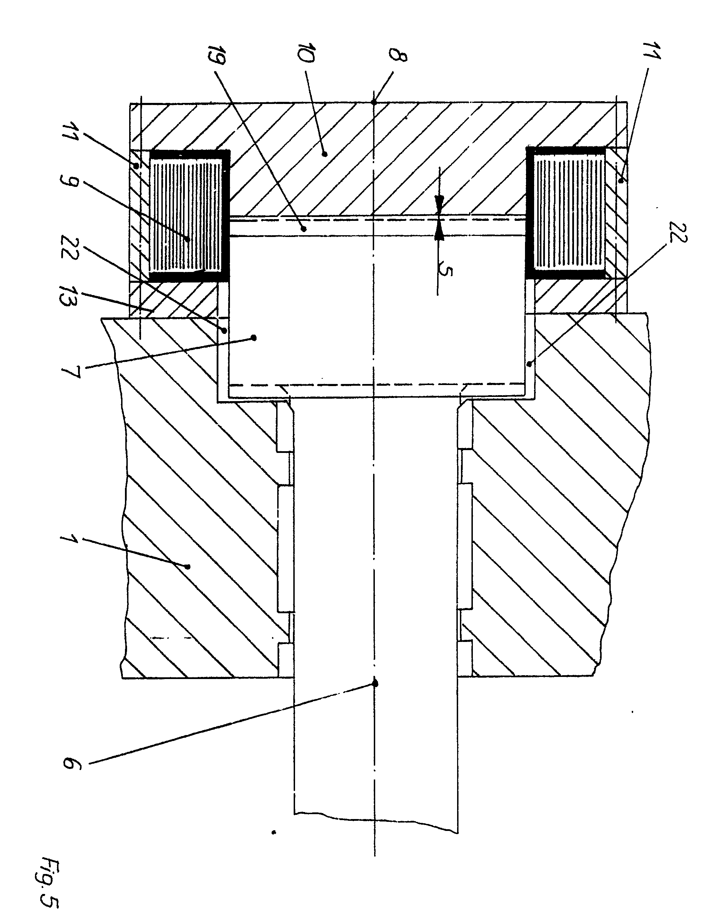

Nun kann der Verriegelungspunkt fuer jede gewuenschte Werkzeugeinbauhoehe entsprechend des Werkzeuges 18 in herkoemmlicher Weise festgelegt werden. Zum Spritzzyklus wird die bewegliche Werkzeugaufspannplatte 2 durch den Eilgangantrieb 12 in Richtung feste Werkzeugaufspannplatte 1 verschoben, bis das Werkzeug 18 fast geschlossen ist. Dieses Mass betraegt ca. 2mm. Dann erfolgt die Verriegelung indem die Verriegelungselemente 21 geschlossen werden. Die Schliesskraft wird nun durch Zufuhr von Gleichstrom in die Spulen 9 aufgebracht. Dabei wird der Gleichstrom ueber einen oder mehrere Thyristorstromsteller zugefuehrt, um eine kontinuierliche Erhoehung der Stromstaerke zu erreichen und ein Aufprallen der Werkzeughaelften 18 beim vollstaendigen Schliessen zu verhindern. Die Stromstaerke wird bis zum Erreichen der Schliesskraft erhoeht. Die Verformung durch die Gesamtelastizitaet des mechanischen Systems der Schliesseinheit darf bei erreichter Schliesskraft der Groesse des voreingestellten Luftspaltes nicht gleich sein und nicht ueberschreiten.Die gestrichelte Linie in Fig.5 zeigt, wie sich der Luftspalt 19 durch das Anziehen der Saeulenenden 7 veraendert. Das Formteil kann nun durch die Spritzeinheit der Maschine gespritzt werden. Nach der abgelaufenen Zykluszeit, die vom Formteil abhaengig ist, wird die Schliesskraft aufgehoben. Dazu wird zuerst der Gleichstrom der Spule 9 abgeschaltet und die Verriegelungselemente 21 werden mit einer Oeffnungskraft beaufschlagt. Zur Erreichung des Entriegelungshubes muss der remanente Magnetismus des magnetischen Kreises beseitigt werden. Dazu werden die Wicklungen der Spulen 9 mit entgegengerichteten Stromfluss erregt. Gleichzeitig wird der Eilgangantrieb 12 zugeschaltet. Erreicht die Magnetisierungskurve den Kraftflussnullpunkt werden die Verriegelungselemente 21 durch die schon wirkende Oeffnungskraft entriegelt und der schon eingeschaltete Eilgangantrieb 12 trennt die Werkzeughaelften 18 und faehrt die bewegliche Werkzeugaufspannplatte 2 in Grundstellung. Mit der Entriegelung wird der entgegengesetzte Strom abgeschaltet. Der entgegengesetzte Strom darf nur so gross sein, dass die Magnetisierungskurve den Kraftflussnullpunkt erreicht, da es bei einer weiteren Erhoehung dieses Stromes wieder zu einer Anziehung der Werkzeughaelften kaeme.

Die Vorteile der erfindungsgemassen Schliesseinheiten gegenueber den bekannten Stand der Technik bestehen vor allem in einer optimalen Energieausnutzung, einer hohen Umweltfreundlichkeit, niedrigem Geraeuschniveau und einer verschleissarmen Arbeitsweise.

## Patentansprüche

1. Verfahren zur Schließkrafterzeugung der Schließeinheit einer Spritzgießmaschine zur Kunststoffverarbeitung für Schließkräfte größer 50kN und Werkzeugeinbauhöhen größer 100 mm, wobei die Schließeinheit im wesentlichen aus einer festen und einer beweglichen Werkzeugaufspannplatte besteht, das Werkzeug über einen die bewegliche Werkzeugaufspannplatte verschiebenden Eilgangantrieb geschlossen wird, bei geschlossenem Werkzeug die Werkzeugaufspannplatten über Säulen miteinander verbunden sind, und auf die sich in der festen Werkzeugaufspannplatte befindlichen Säulenenden Kraftelemente einwirken, die die Schließkraft aufbringen, dadurch **gekennzeichnet,** daß die Säulenenden (7) beim Werkzeugschließen in Elektromagnete (8) eintauchen und bei Zuführung von Gleichstrom den Anker für die elektromagnetische Schließkrafterzeugung bilden.

2. Vorrichtung zur Durchführung des Verfahrens nach Anspruch 1, wobei die Schließeinheit im wesentlichen aus einer festen und einer beweglichen Werkzeugaufspannplatte besteht, das Werkzeug über einen die bewegliche Werkzeugaufspannplatte verschiebenden Eilgangantrieb geschlossen wird, bei geschlossenem Werkzeug die Werkzeugaufspannplatten über Säulen miteinander verbunden sind, und auf die sich in der festen Werkzeugaufspannplatte befindlichen Säulenenden Kraftelemente einwirken, die die Schließkraft aufbringen, dadurch **gekennzeichnet, daß**

- auf der werkzeugabgewandten Seite der festen Werkzeugaufspannplatte (1) in axialer Verlängerung der Öffnungen (5) für das Eintauchen der Säulenenden (7) Elektromagnete (8) angeordnet sind,
- ein Elektromagnet (8) aus einem Mantel (11), einem an der festen Werkzeugaufspannplatte (1) angeordnetem Rückschlußdeckel (13) und einem als abgesetzten zylindrischen Körper ausgebildeten Magnetkern (10) besteht, dessen kleinerer Durchmesser in Werkzeugrichtung weist und mindestens der Größe des Säulendurchmessers entspricht,
- bei geschlossenem Werkzeug sich zwischen der Stirnfläche des kleineren zylindrischen Teils des Magnetkernes (10) und der dazu parallelen Stirnfläche des Säulenendes (7) ein Luftspalt (19) mit definierter Größe s befindet,
- zwischen Rückschlußdeckel (13) und Magnetkern (10) eine Spule (9) angeordnet ist, die vom Mantel (11) umschlossen wird und die bei geschlossenem Werkzeug den kleineren zylindrischen Teil des Magnetkerns (10), den Luftspalt (19) und einen Teil des Säulenendes (7) umschließt.

3. Schliesseinheit fuer Spritzgiessmaschinen bestehend aus einem Schliessseitenuntersatz, einer festen Werkzeugaufspannplatte, eine Stuetzplatte und einer beweglichen Werkzeugaufspannplatte mit Gleitschuhen zum Verfahren auf dem Schliessseitenuntersatz, mit Saeulen die in der Stuetzplatte und der festen Werkzeugaufspannplatte gelagert sind, mit Verriegelungselementen zum Verriegeln der festen Werkzeugaufspannplatte mit der beweglichen Werkzeugaufspannplatte, einem Eilgangantrieb und mit Elektromagneten gekennzeichnet dadurch,

- dass auf der werkzeugabgewandten Seite der festen Werkzeugaufspannplatte (1) um die durch die feste Werkzeugaufspannplatte (1) hindurchragenden Saeulenende (7) zylindrische Elektromagneten (8) angeordnet sind,
- ein Elektromagnet (8) aus einem zylindrischen Mantel (11), einem an der festen Werkzeugaufspannplatte (1) angeordneten Rueckschlschlussdeckel (13) und einem als abgesetzten zylindrischen Koerper ausgebildeten Magnetkern (10) besteht, dessen kleinerer Durchmesser in Werkzeugrichtung weist und mindestens der Groesse des Saeulenendendurchmessers entspricht,
- sich zwischen der Stirnflaeche des kleineren zylindrischen Teils des Magnetkernes (10) und der dazu parallel angeordneten Stirnflaeche des Saeulenendes (7) ein Luftspalt (19) mit definierter Groesse s befindet,
- um den kleineren zylindrischen Teil des Magnetkernes (10), den Luftspalt (19) und einem Teil des Saeulenendes (7) zwischen Magnetkern (10) und Rueckschlussdeckel (13) eine Spule (9) angeordnet ist.

4. Schliesseinheit nach Anspruch 3, gekennzeichnet dadurch, dass die Saeulenendendurchmesser (7) groesser sind als die Saeulendurchmesser (6) und die Saeulenenden (7) in Ausnehmungen (22) der festen Werkzeugaufspannplatte (1) angeordnet sind.

5. Schließeinheit nach den Ansprüchen 3 oder 4, dadurch **gekennzeichnet,** daß die Spulen (9) aus elektrisch leitendem Bandmaterial, vorzugsweise aus Aluminiumfolie, bestehen.

6. Vorrichtung nach Anspruch 2, dadurch **gekennzeichnet,** daß die Spulen (9) aus elektrisch leitendem Bandmaterial, vorzugsweise aus Aluminiumfolie, bestehen.

**Claims**

1. A process for generating the closing force of the closing unit of an injection moulding machine for the processing of synthetic resins for closing forces exceeding 50 kN and tool installation heights exceeding 100 mm, where the closing unit substantially comprises a fixed tool clamping plate and a moveable tool clamping plate, the tool is closed via a high-speed drive which displaces the moveable tool clamping plate, when the tool is closed the tool clamping plates are connected to one another via columns, and force elements which apply the closing force act upon the column ends located in the fixed tool clamping plate, characterised in that when the tool is closed the column ends (7) penetrate into electromagnets (8) and when direct current is supplied they form the armature for the electromagnetic generation of the closing force.

2. A device for the implementation of the process claimed in Claim 1, wherein the closing unit substantially comprises a fixed tool clamping plate and a moveable tool clamping plate, the tool is closed via a high-speed drive which displaces the moveable tool clamping plate, when the tool is closed the tool clamping plates are connected to one another via columns, and force elements which apply the closing force act upon the column ends located in the fixed tool clamping plate, characterised in that
   - on the side of the fixed tool clamping plate (1) facing away from the tool, electromagnets (8) are arranged in an axial extension of the openings (5) for the penetration of the column ends,
   - an electromagnet (8) comprises a casing (11), a short-circuting cover (13) arranged on the fixed tool clamping plate (10), and a magnet core (10) which is formed as a stepped cylindrical body and the smaller diameter of which faces in the direction of the tool and at least corresponds to the size of the column diameter,
   - when the tool is closed, an air gap (19) of a determinate size s is present between the end face of the smaller cylindrical part of the magnet core (10) and the parallel end face of the column end (7)
   - a coil (9) is arranged between the short-circuiting cover (13) and the magnet core (10), which coil (9) is surrounded by the casing (11) and, when the tool is closed, surrounds the smaller cylindrical part of the magnet· core (10), the air gap (19) and a part of the column end (7).

3. A closing unit for injection moulding machines comprising a closing side base, a fixed tool clamping plate, a support plate, and a moveable tool clamping plate with sliding shoes for movement on the closing side base, with columns which are mounted in the support plate and the fixed tool clamping plate, with locking elements which serve to lock the fixed tool clamping plate to the moveable tool clamping plate, with a high-speed drive and with electromagnets, characterised in that
   - on the side of the fixed tool clamping plate (1) facing away from the tool, cylindrical electromagnets (8) are arranged around the column end (7) which projects through the fixed tool clamping plate (1),
   - an electromagnet (8) comprises a cylindrical casing (11), a short-circuiting cover (13) arranged on the fixed tool clamping plate (1), and a magnet core (10) which forms a stepped cylindrical body and the smaller diameter of which faces in the direction of the tool and corresponds at least to the size of the diameter of the column ends,
   - an air gap (19) of a determinate size s is present between the end face of the smaller cylindrical part of the magnet core (10) and the end face, extending in parallel thereto, of the column end (7)
   - a coil (9) is arranged around the smaller cylindrical part of the magnet core (10), the air gap (19), and a part of the column end (7) between the magnet core (10) and the short-circuiting cover (13).

4. A closing unit as claimed in Claim 3, characterised in that the diameters of the column ends (7) are greater than the column diameters (6), and the column ends (7) are arranged in recesses (22) of the fixed tool clamping plate (1).

5. A closing unit as claimed in Claims 3 or 4, characterised in that the coils (9) are composed of electrically conductive sheet material, preferably aluminium foil.

6.  A device as claimed in Claim 2, characterised in that the coils (9) consist of electrically conductive sheet material, preferably aluminium foil.

**Revendications**

1.  Procédé de production de la force de fermeture de l'unité de fermeture d'une presse à mouler par injection pour la transformation des matières plastiques, pour des forces de fermeture supérieures à 50 kN et pour des hauteurs de montage d'outil supérieures à 100 mm, dans lequel l'unité de fermeture est essentiellement composée d'un plateau support d'outil fixe et d'un plateau support d'outil mobile, l'outil étant fermé au moyen d'un entraînement d'approche rapide qui pousse le plateau support d'outil mobile, les plateaux supports d'outil sont reliés l'un à l'autre par des colonnes lorsque l'outil est fermé, et des éléments générateurs de force qui appliquent la force de fermeture agissent sur les extrémités des colonnes qui se trouvent dans le plateau support d'outil fixe,
    caractérisé en ce que,
    lors de la fermeture de l'outil, les extrémités (7) des colonnes plongent dans des électroaimants (8) et, lorsqu'un courant continu est acheminé, elles forment l'armature pour produire la force de fermeture par voie électromagnétique.

2.  Dispositif pour la mise en oeuvre du procédé selon la revendication 1, dans lequel l'unité de fermeture est essentiellement composée d'un plateau support d'outil fixe et d'un plateau support d'outil mobile, l'outil est fermé au moyen d'un entraînement d'approche rapide qui pousse le plateau support d'outil mobile, les plateaux supports d'outil sont reliés l'un à l'autre par des colonnes lorsque l'outil est fermé, et des éléments générateurs de force qui appliquent la force de fermeture agissent sur les extrémités des colonnes qui se trouvent dans le plateau support d'outil fixe,
    caractérisé en ce que
    -   des électro-aimants (8) sont agencés sur la face du plateau support d'outil (1) qui est à l'opposé de l'outil, dans le prolongement axial des ouvertures (5) qui reçoivent les extrémités (7) des colonnes,
    -   un électro-aimant (8) est composé d'une robe (11), d'un couvercle (13) de fermeture du circuit magnétique disposé sur la plaque support d'outil fixe (1), et d'un noyau magnétique (10) formé d'un corps cylindrique étagé, dont le petit diamètre est dirigé vers l'outil et correspond au moins à la valeur du diamètre de la colonne,
    -   lorsque l'outil est fermé, un entrefer (19) d'une largeur définie (s) se trouve entre la surface frontale de la partie de petit diamètre du noyau magnétique (10) et la surface frontale de l'extrémité (7) de la colonne qui y est parallèle,
    -   une bobine (9) est disposée entre le couvercle (13) de fermeture du circuit magnétique et le noyau magnétique (10), cette bobine étant entourée par la robe (11) et enfermant la petite partie cylindrique du noyau magnétique (10), l'entrefer (19) et une partie de l'extrémité (7) de la colonne lorsque l'outil est fermé.

3.  Unité de fermeture pour presse à mouler par injection, composée d'un socle d'unité de fermeture, d'un plateau support d'outil fixe, d'un plateau d'appui et d'un plateau support d'outil mobile munie de patins pour pouvoir se déplacer sur le socle de l'unité de fermeture, et comprenant des colonnes qui sont montées dans le plateau d'appui et dans le plateau support d'outil fixe, des éléments de verrouillage qui verrouillent le plateau support d'outil fixe sur le plateau support d'outil mobile, un entraînement d'approche rapide et des électro-aimants, caractérisée en ce que
    -   des électro-aimants cylindriques (8) sont agencés sur la face du plateau support d'outil fixe (1) qui est à l'opposé de l'outil, autour des extrémités (7) des colonnes qui traversent le plateau support d'outil fixe (1),
    -   un électro-aimant (8) composé d'une robe cylindrique (11), d'un couvercle (13) de fermeture du circuit magnétique agencé sur le plateau support d'outil fixe (1) et un noyau magnétique (10) constitué par un corps cylindrique étagé, dont le petit diamètre est dirigé vers l'outil et correspond au moins à la valeur du diamètre de l'extrémité de la colonne,
    -   un entrefer (19) d'une largeur s définie se trouve entre la surface frontale de la petite partie cylindrique du noyau magnétique (10) et la surface frontale de l'extrémité (7) de la colonne qui est disposée parallèlement à cette surface frontale,
    -   une bobine (9) est agencée autour de la petite partie cylindrique du noyau magnétique (10), de l'entrefer (19) et d'une partie de l'extrémité (7) de la colonne qui est comprise entre le noyau magnétique (10) et le couvercle (13) de fermeture du circuit magnétique.

4. Unité de fermeture selon la revendication 3, caractérisée en ce que les diamètres (7) des extrémités des colonnes sont plus grands que les diamètres (6) des colonnes et en ce que les extrémités (7) des colonnes sont disposées dans des évidements (22) du plateau support d'outil fixe (1).

5. Unité de fermeture selon les revendications 3 et 4, caractérisée en ce que les bobines (9) sont faites d'une matière en bande conductrice de l'électricité, de préférence d'une feuille d'aluminium.

6. Dispositif selon la revendication 2, caractérisé en ce que les bobines (9) sont faites d'une matière en bande conductrice de l'électricité, de préférence d'une feuille d'aluminium.

Fig.1

Fig. 2

Fig.3

Fig. 4

13

Fig. 5

Fig.6